# EUROPÄISCHE PATENTSCHRIFT

(11) **EP 2 024 075 B1**
(45) Veröffentlichungstag und Bekanntmachung des Hinweises auf die Patenterteilung: **22.08.2018**
(21) Anmeldenummer: 07723571.1
(22) Anmeldetag: 24.03.2007
(51) Int. Cl.: B01J 8/00, B01J 8/06

(54) **SAMMELLEITUNG FÜR RÖHRENSPALTÖFEN**
COLLECTING LINE FOR TUBULAR REFORMING FURNACES
CONDUIT COLLECTEUR POUR FOURS TUBULAIRES FENDUS

(30) Priorität: 15.05.2006 DE 102006022898
(43) Veröffentlichungstag der Anmeldung: 18.02.2009
(73) Patentinhaber: ThyssenKrupp Industrial Solutions AG, 45143 Essen (DE)
(72) Erfinder: MEISSNER, Oliver, 45966 Gladbeck (DE); BEYER, Falk, 44269 Dortmund (DE)
(74) Vertreter: Kutzenberger Wolff & Partner
(86) Internationale Anmeldenummer: PCT/EP2007/002624
(87) Internationale Veröffentlichungsnummer: WO 2007/131568

(56) Entgegenhaltungen:
- EP-A1- 0 799 639
- DE-A1- 1 667 324
- DE-C1- 4 327 176
- US-A- 4 048 352
- US-A- 4 422 274
- US-A1- 2004 037 760

## Beschreibung

Die Erfindung betrifft eine Sammelleitung für Röhrenspaltöfen, welche von innen nach außen mindestens zwei Schichten aufweist, die durch eine innere Isolationsschicht und ein metallisches Außen- bzw. Tragrohr gebildet werden. Weiterhin umfasst die Sammelleitung mehrere Stutzen, über welche Reaktionsrohre des Röhrenofens mit der Sammelleitung verbunden werden können. Die Sammelleitung weist dabei in Umfangsrichtung unterschiedliche Wärmedurchlasswiderstände auf. Diese werden über unterschiedliche Dicken der Isolationsschicht, in der Regel feuerfeste Betonarten oder Formsteine, realisiert. Weiterhin umfasst die Erfindung einen Röhrenspaltofen, in welchem eine oder mehrere Sammelleitungen gemäß einer der erfindungsgemäßen Ausführungsformen vorgesehen ist.

Es sind eine Vielzahl von Röhrenspaltöfen zur indirekten Erhitzung von spaltbaren Medien, insbesondere für die Spaltung von Kohlenwasserstoffen zur Gewinnung von Synthesegas und/oder Wasserstoff bekannt. In diesen Röhrenspaltöfen sind eine Vielzahl von Reaktionsrohren im Ofenraum als Register oder Bündel angeordnet, wobei diese Reaktionsrohre mit Sammelleitungen verbunden werden, welche unterhalb des Ofenbodens verlaufen. DE 1 542 530 B zeigt einen solchen Röhrenspaltofen.

Wie in DE 1 542 530 B weiterhin gezeigt, sind die Sammelleitungen selbst mehrschichtig aufgebaut und umfassen mindestens ein äußeres metallisches Tragrohr, den so genanten Druckmantel, welches üblicherweise aus einem schweißbaren Stahlwerkstoff besteht, und ein innen liegendes Isolationsrohr, das in der Regel durch eine feuerfeste Ausmauerung oder einen feuerfesten Beton gebildet wird. In DE 1 667 324 B ist ein dreifach geschichtetes Rohr gezeigt, wie es industriell verwendet wird. Die innerste Schicht kann ein metallisches Innenrohr sein, wie es in der DE 1 542 530 B bereits für den Durchtrittsbereich des Reaktionsrohres in die Sammelleitung vorgeschlagen wird. Dieses Innenrohr dient dem Schutz der Betonisolierung vor Erosion durch die Prozessgasströmung. Die Temperatur in der Sammelleitung beträgt cirka 800°C bis 950°C.

Die Dicke oder Isolationswirkung der Isolationsschicht muss dabei derart gewählt werden, dass sie einerseits den Stahlwerkstoff des Außen- oder Tragrohres schützt, indem die Temperatur im Außen- bzw. Tragrohr auf ca. 200°C begrenzt wird, und andererseits der Beton nicht zu kalt wird. Bei einer zu starken Abkühlung würde das unter erhöhtem Druck befindliche Synthesegas in dieser Isolationsschicht auskondensieren, wodurch Schäden am Beton und im Druckmantel auftreten können.

Dabei stellt es ein Problem dar, dass die Sammelleitungen thermisch in Umfangsrichtung sehr unterschiedlich beansprucht werden. Dies wird auf die thermische Strahlung des heißen Ofengebäudes, dessen Ofenboden je nach konkreter Bauform nur circa einen Meter oberhalb der Oberseite der Sammelleitung entfernt ist, zurückgeführt. Zusätzlich wirken die ebenfalls heißen Reaktionsrohre beziehungsweise die Stutzen auf die Oberseite der Sammelleitung ein und erhöhen die thermische Belastung.

Weiterhin stellen die Stutzen der Reaktionsrohre und die Durchleitung der Reaktionsrohre durch die Isolationsschicht der Sammelleitung eine Verschwächung dar, die anfällig für nachfolgende mechanische Schädigungen ist. Beispielsweise geht aus der EP 0 799 639 A1 hervor, im Bereich der Stutzen ein abweichendes Isoliermaterial zu verwenden. Dieses enthält einen Katalysator, der korrodierende Bestandteile chemisch umsetzt und auf diese Weise das metallische Außenrohr schützt. Weiterhin sind aus der US 2004 037760 A1 Sammelleitungen mit unterschiedlich guten Isoliermaterialien über den Radius bekannt.

In der DE4327176C wird eine an einen Röhrenofen angeschlossene Sammelleitung mit einem Außenrohr offenbart, das eine feuerfeste Auskleidung aufweist. Im Inneren der Sammelleitung ist ein Strömungsraum vorgesehen, welcher zentrisch innerhalb des Außenrohrs angeordnet ist.

Daher ist es Aufgabe der vorliegenden Erfindung, diese Schädigungen in der Sammelleitung zu verhindern und eine verbesserte Sammelleitung zur Verfügung zu stellen. Die vorliegende Erfindung löst diese Aufgabe gemäß dem Hauptanspruch, wobei die abhängigen Unteransprüche vorteilhafte Ausgestaltungen darstellen.

Es wurde eine Sammelleitung zur Ableitung von heißen Prozessgasen in Röhrenspaltöfen gefunden, die von innen nach außen mindestens die beiden Schichten
- Isolationsschicht aus feuerfestem Beton oder feuerfester Mauerung,
- Wand eines metallischen Außenrohres aufweist, und vorteilhafterweise eine dritte Schicht aufweist, nämlich
- die Wand eines metallischen Innenrohres,
und weiterhin mehrere Stutzen umfasst, über welche die Reaktionsrohre des Röhrenspaltofens mit der Sammelleitung verbunden werden können. Dabei weist die Sammelleitung in Umfangsrichtung unterschiedliche Wärmedurchlasswiderstände auf, wobei ein Strömungsraum exzentrisch im Außenrohr angeordnet ist, wodurch die Isolationsschicht in Umfangsrichtung unterschiedliche Dicken und Wärmedurchlasswiderstände aufweist.

In der allgemeinen Form ist der Wärmedurchlasswiderstand R gemessen in [m² * K / W] definiert als der Kehrwert des Wärmedurchlasskoeffizienten Λ und ist unter anderem abhängig von der Schichtdicke und der stoffspezifischen Wärmeleitfähigkeit λ_{R}.

Dabei werden die unterschiedlichen Wärmedurchlasswiderstände in der Sammelleitung durch unterschiedliche Wärmedurchlasswiderstände der Isolationsschicht erzeugt. Eine bevorzugte Ausführungsform besteht darin, dass ein metallisches Innenrohr exzentrisch im Außenrohr angeordnet ist, wodurch die Isolationsschicht in Umfangsrichtung unterschiedliche Dicken und dadurch sich ändernde Wärmedurchlasswiderstände aufweist. Dabei ist es bei einer exzentrischen Anordnung des Innenrohres und der damit verbunden wechselnden Wanddicke der Isolationsschicht vorteilhaft, dass die Isolationsschicht in Umfangsrichtung im Bereich der Stutzen ihre maximale Dicke aufweist, da dies auch der dem Ofengebäude zugewandte Bereich ist, welcher der höchsten thermischen Einwirkung ausgesetzt ist. Die exzentrische Lage des freien Strömungsraumes im Inneren der Sammelleitung, kann bei der Herstellung auch ohne ein in der Sammelleitung verbleibendes Innenrohr erzeugt werden.

Ein weiterer Vorteil der exzentrischen Innenrohranordnung besteht darin, dass die Isolationsschicht, die in der Regel aus einem feuerfesten Beton gebildet wird, in dem Bereich der Sammelleitung die maximale Dicke aufweist, in dem die Durchführungen der verbundenen Reaktionsrohre vorliegen. Die aus den Durchführungen resultierende Verschwächung des Betons, die das Auftreten von Rissen begünstigt, wird somit ganz oder teilweise kompensiert.

Eine weitere vorteilhafte Ausgestaltung besteht darin, dass die Isolationsschicht in Umfangsrichtung aus zwei oder mehreren Segmenten mit unterschiedlichen Werkstoffen gebildet wird, wobei sich die Werkstoffe vor allem hinsichtlich ihrer jeweiligen stoffspezifischen Wärmeleitfähigkeit unterscheiden. Vorrangig sind die Werkstoffe der Gruppe der feuerfesten Betonarten oder der feuerfesten Formsteine zu wählen. Diese Ausführungsform hat den Vorteil, dass die Erfordernisse einer hinreichenden Isolation im Bereich der Zuführungen und einer ausreichend hohen Temperatur in der Isolationsschicht, die auch in der dem Ofengebäude abgewandten Seite gegeben sein muss, unabhängig voneinander eingestellt werden können. Dazu wird der Werkstoff, der den höchsten Wärmedurchlasswiderstand R aufweist, in Umfangsrichtung im Bereich der Stutzen angeordnet.

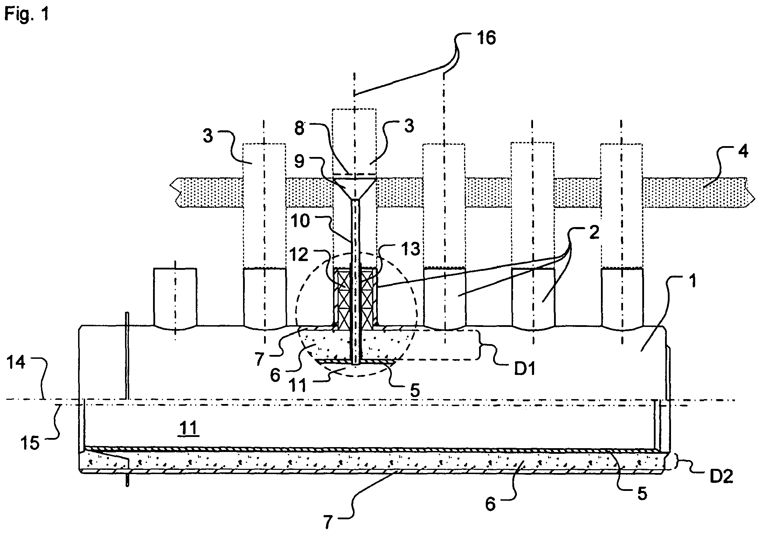

Von der Erfindung ist weiterhin ein Röhrenspaltofen umfasst, bei welchem eine oder mehrere Sammelleitungen in einer der vorstehend beschriebenen Ausführungsformen vorgesehen sind. Nachfolgend soll anhand von Fig.1 eine vorteilhafte Aufführungsform der vorliegenden Erfindung näher beschrieben werden, ohne auf die konkrete Ausführungsform beschränkt zu sein. Die Fig. 1 zeigt einen Abschnitt der erfindungsgemäßen Sammelleitung 1, wobei ein Stutzen 2 und die untere Hälfte der Sammelleitung 1 als Schnitt dargestellt sind.

Oberhalb der Sammelleitung 1 sind die Stutzen 2 angeordnet, die mit den Reaktionsrohren 3 verbunden sind. Oberhalb der Sammelleitung 1 ist der Ofenboden 4 als punktierte Fläche angedeutet. Die Sammelleitung 1 weist drei Schichten auf. Eine erste Schicht, die durch das metallische Innenrohr 5 gebildet wird, eine Isolationsschicht 6 als zweite Schicht, die aus einem feuerfesten Beton besteht, und eine dritte äußere Schicht, die durch das Außen- oder Tragrohr 7 gebildet wird. Die gestrichelt angedeuteten Reaktionsrohre 3 sind im Betrieb mit einer Katalysatorschüttung gefüllt (nicht dargestellt), die durch einen Lochboden 8 gehalten wird. An den Lochboden 8 schließt sich ein konusförmiges Sammelelement 9 an, das mit einem Prozessgasrohr 10 verbunden ist, wobei das Prozessgasrohr 10 in den freien Strömungsraum 11 der Sammelleitung 1 mündet. Im Bereich unterhalb des Ofenbodens 4 beziehungsweise nach dem Sammelelement 9, ist das Prozessgasrohr 10 durch feuerfeste Formsteine 12 ummantelt. Weiterhin ist das Prozessgasrohr 10 im Bereich der Stutzen 2 durch ein Führungsrohr 13 gesteckt.

Das Innenrohr 5 ist exzentrisch in der Sammelleitung 1 angeordnet. Durch den exzentrischen Einbau des Innenrohres 5, verläuft die Achse 14 des Tragrohres 7 oberhalb und parallel zur Achse 15 des Innenrohres 5.

Bei der liegenden Sammelleitung 1 bilden sich somit in Umfangrichtung stetig ansteigende beziehungsweise abfallende Wandstärken aus, gemäß der sich ändernden Wandstärke der Isolationsschicht 6. Die maximale Wandstärke D1 der Isolationsschicht 6 liegt in der oberen Schnittfläche im Bereich der Stutzen 2. In dieser Schnittfläche liegen auch die Achsen der Prozessgasrohre 10 und der Führungsrohre 13. Die geringste Wandstärke D2 der Isolationsschicht 6 bildet sich in der gegenüber liegenden unteren Schnittfläche. In dem in Fig. 1 gezeigten Beispiel sind die obere und untere Schnittfläche Teil derselben Ebenen, in welcher auch die Achsen 14 und 15 und die Achsen 16 der Prozessgasrohre 10 sowie der Führungsrohre 13 liegen.

## Patentansprüche

1. Sammelleitung (1) zur Ableitung von heißen Prozessgasen in Röhrenspaltöfen, wobei die Sammelleitung (1) von innen nach außen mindestens die beiden Schichten
- Isolationsschicht (6) aus feuerfestem Beton oder feuerfester Mauerung,
- Wand eines metallischen Außenrohres (7) aufweist,
und weiterhin mehrere Stutzen (2) umfasst, über welche die Rohre des Röhrenofens mit der Sammelleitung (1) verbunden werden können,
**dadurch gekennzeichnet, dass**
die Sammelleitung (1) in Umfangsrichtung unterschiedliche Wärmedurchlasswiderstände aufweist, wobei ein Strömungsraum exzentrisch im Außenrohr (7) angeordnet ist, wodurch die Isolationsschicht (6) in Umfangsrichtung unterschiedliche Dicken und Wärmedurchlasswiderstände aufweist.

2. Sammelleitung (1) nach Anspruch 1,
**dadurch gekennzeichnet, dass**
die Sammelleitung (1) von innen nach außen als dritte Schicht die Wand eines metallischen Innenrohres (5) aufweist.

3. Sammelleitung (1) nach einem der vorhergehenden Ansprüche,
**dadurch gekennzeichnet, dass**
die Größe und Lage des exzentrischen Strömungsraumes durch ein exzentrisch angeordnetes metallisches Innenrohr (5) gebildet wird.

4. Sammelleitung (1) nach einem der vorhergehenden Ansprüche,
**dadurch gekennzeichnet, dass**
die Isolationsschicht (6) in Umfangsrichtung im Bereich der Stutzen (2) ihre maximale Dicke aufweist.

5. Sammelleitung (1) nach einem der vorhergehenden Ansprüche,
**dadurch gekennzeichnet, dass**
die Isolationsschicht (6) in Umfangsrichtung aus zwei oder mehreren Segmenten mit unterschiedlichen Werkstoffen gebildet wird, wobei die Unterschiedlichkeit der Werkstoffe mindestens in der jeweiligen stoffspezifischen Wärmeleitfähigkeit besteht und diese Werkstoffe vorrangig aus der Gruppe der feuerfesten Betonarten oder Formsteine genommen sind.

6. Sammelleitung (1) nach Anspruch 5,
**dadurch gekennzeichnet, dass**
der Werkstoff, der den höchsten Wärmedurchlasswiderstand aufweist, in Umfangsrichtung im Bereich der Stutzen (2) angeordnet ist.

7. Röhrenspaltofen,
**dadurch gekennzeichnet, dass**
dieser eine oder mehrere Sammelleitungen (1) gemäß einem der vorstehenden Ansprüche umfasst.

## Claims

1. Collecting line (1) for discharging hot process gases in tubular reforming furnaces, the collecting line (1) having, from the inside outwards, at least the following two layers:
- an insulating layer (6) of refractory concrete or refractory masonry,
- a wall of a metallic outer tube (7),
and also comprising multiple nozzles (2), via which the tubes of the tubular reforming furnace can be connected to the collecting line (1),
**characterized in that**
the collecting line (1) has different heat transmission resistances in the circumferential direction, a flow space being arranged eccentrically in the outer tube (7), whereby the insulating layer (6) has different thicknesses and heat transmission resistances in the circumferential direction.

2. Collecting line (1) according to Claim 1,
**characterized in that**
the collecting line (1) has as a third layer, from the inside outwards, the wall of a metallic inner tube (5).

3. Collecting line (1) according to one of the preceding claims,
**characterized in that**
the size and position of the eccentric flow space is formed by an eccentrically arranged metallic inner tube (5).

4. Collecting line (1) according to one of the preceding claims,
**characterized in that**
the insulating layer (6) has its maximum thickness in the circumferential direction in the region of the nozzles (2).

5. Collecting line (1) according to one of the preceding claims,
**characterized in that**
the insulating layer (6) is formed in the circumferential direction by two or more segments comprising different materials, wherein the materials differ at least in the respective substance-specific thermal conductivity and these materials are taken primarily from the group of refractory types of concrete or shaped blocks.

6. Collecting line (1) according to Claim 5,
**characterized in that**
the material that has the highest heat transmission resistance is arranged in the circumferential direction in the region of the nozzles (2).

7. Tubular reforming furnace,
**characterized in that**
it comprises one or more collecting lines (1) according to one of the preceding claims.

## Revendications

1. Conduit collecteur (1) servant à évacuer des gaz chauds de processus produits dans des fours tubulaires fendus, le conduit collecteur (1) présentant de l'intérieur à l'extérieur au moins les deux couches suivantes :
- une couche isolante (6) en béton réfractaire ou en maçonnerie réfractaire,
- la paroi d'un tube métallique extérieur (7),
et comporte en outre plusieurs tubulures (2) par lesquelles les tubes du four tubulaire peuvent être raccords au conduit collecteur (1),
**caractérisé en ce que**
le conduit collecteur (1) présente à sa périphérie différentes résistances au passage de la chaleur et
**en ce qu'**un espace d'écoulement est disposé en position décentrée dans le tube extérieur (7), grâce à quoi la couche isolante (6) présente différentes épaisseurs et résistances au passage de la chaleur dans la direction périphérique.

2. Conduit collecteur (1) selon la revendication 1, **caractérisé en ce que** le conduit collecteur (1) présente de l'intérieur à l'extérieur comme troisième couche la paroi d'un tube métallique intérieur (5).

3. Conduit collecteur (1) selon l'une des revendications précédentes, **caractérisé en ce que** la taille et la position de l'espace d'écoulement décentré est formée par un tube métallique intérieur (5) disposé en position décentrée.

4. Conduit collecteur (1) selon l'une des revendications précédentes, **caractérisé en ce que** la couche isolante (6) présente son épaisseur maximale dans la direction périphérique au niveau des tubulures (2) .

5. Conduit collecteur (1) selon l'une des revendications précédentes, **caractérisé en ce que** la couche isolante (6) est formée dans la direction périphérique de deux ou plusieurs segments présentant des matériaux différents, la différence entre les matériaux consistant au moins en la conductivité thermique particulière à chaque matériau et ces matériaux étant repris principalement dans l'ensemble des types réfractaires de béton ou des blocs moulés réfractaires.

6. Conduit collecteur (1) selon la revendication 5, **caractérisé en ce que** le matériau qui présente la plus haute résistance au passage de la chaleur est disposé dans la direction périphérique au niveau des tubulures (2) .

7. Four tubulaire fendu **caractérisé en ce qu'**il comporte un ou plusieurs conduits collecteurs (1) selon l'une des revendications précédentes.
